# EUROPEAN PATENT APPLICATION

(11) **EP 1 803 779 A2**
(43) Date of publication of application: **04.07.2007**
(21) Application number: 06292008.7
(22) Date of filing: 21.12.2006
(51) Int. Cl.: C09C 1/42

(54) **Production process improvement resulting in high brightness and low viscosity coarse kaolin clay for paper coating**

(30) Priority: 27.12.2005 BR PI0506222
(71) Applicant: Companhia Vale Do Rio Doce, 33030-970 Santa Luzia, Minas Gerais (BR)
(72) Inventor: Almeida Valadares, Maria Cristina,, Behlo Horizonte - MG 30430-260 (BR)
(74) Representative: Vieillefosse, Jean-Claude

(57) **Abstract**

"PRODUCTION PROCESS IMPROVEMENT RESULTING IN A HIGH BRIGHTNESS AND LOW VISCOSITY COARSE KAOLIN CLAY FOR USE AS A COATING", where a raw material consisting of the coarse fraction of the coarse kaolin clay discarded in the high performance pigment production method is subject to: A) delamination of the coarse waste; followed by B) centrifuging of the delaminated kaolin clay; followed by C) magnetic separation and then by the stages of D) chemical bleaching E) filtering and F) drying, thereby producing a high brightness and low viscosity paper coating pigment.

## Description

This report concerns a production process improvement resulting in a high brightness and low viscosity kaolin clay for use as a coating and, more specifically, as a paper filler pigment and/or coating pigment for rotogravure paper.

It is known to those skilled in the art that, conventionally, there is a defined relationship between the brightness of the kaolin clay and its particle size. The finer the kaolin clay, the greater the brightness. Likewise, the coarser the kaolin clay, the lesser the brightness. This characteristic is due to the fact that the main contaminants of kaolin clay usually come in particles sizes ranging from 0.5 to 5.0 µm. Therefore, in particle size classification operations, especially in centrifuge processes, such contaminants are concentrated in the coarser fractions, thus reducing the brightness of the kaolin clay. Likewise, the finer fractions of kaolin clay tend to be brighter.

As is known, kaolin is a rock consisting of clay minerals, usually predominated by kaolinite. Kaolin is used in various industrial applications because of its characteristics, such as chemical inertness and wide Ph range, brightness, low abrasion, low electric and thermal conductivity, high coating capability and good rheology, thanks to its particle shape and size characteristics. It is also a low cost material compared to other comparable materials.

However, kaolin is rarely found in a pure form. Special and well-known processing methods are required to remove components that are considered to be unfavorable. Some of these components, such as iron and titanium impurities, impart undesirable color to the clay. Other impurities, such as sand, impart abrasiveness. Still other impurities have an undesirable effect on the rheology of the kaolin.

Another relevant aspect is that the characteristics of kaolin clay vary from one deposit to another and there may even be significant characteristic variations in the same deposit. It is common to find a thin transition layer between the two types of kaolin clay. Coarse and fine clay have very different characteristics due to their geological origins.

Coarse kaolin has narrow size distribution, especially at the fine end of the size distribution curve, where no more than 15% by weight is less than 0.2 µm in the desanded fraction. A second characteristic of coarse kaolin is the high degree of kaolinite crystallization. The degree of crystallization is measured trough the Hinckley index, which determines how well a crystal structure of a kaolinite is ordered. Usually coarse kaolin has a Hinckley Crystallinity Index greater than 0.6.

Fine kaolin has a large percentage of fines, with at least 30% by weight less than 0.2 µm in the desanded fraction. In addition to being smaller in size, fine kaolin particles are more spherical in shape and have a lesser degree of crystallization, (Hinckley index less than 0,5).

In some applications the requirements for the kaolin pigment are very rigorous, as is the case with paper applications. Kaolin pigments are widely used as paper fillers and coatings. When a sheet of paper is composed solely of cellulose wood fiber it has an extremely irregular surface, caused by free spaces between the fibers. Kaolin pigment can be used in the paper industry to fill in the free spaces between fibers or as a coating to make the paper surface smoother and easier to print ink onto, resulting in better printing results.

Specifications for kaolin coatings are much more rigorous that those for kaolin fillers. Properties such as opacity, brightness, sheet gloss, and printing gloss, hereinafter referred to as optical properties, and rheological properties are greatly important for kaolin clay used as a coating.

With the emergence of increasingly high-speed paper coating machines, pigment rheology is also becoming increasingly essential in the application stage. During the paper coating process, the kaolin pigment is subject to high shear rates, which requires the kaolin pigment to have very good rheology.

It is known that for a given pigment, the greater the percentage of solids, the greater the viscosity. Kaolin pigments that have low viscosity at high shear rates and with high solids percentages are considered to be premium products, as they enable the coating machine to operate at high speeds, thereby improving productivity and reducing drying costs. If the kaolin pigment does not have good rheology, either the coating machine will be required to operate at very low speeds, resulting in low productivity, or the coating will have to be diluted, resulting in increased costs in the drying stage.

Pigments that provide improved optical properties are attractive to the paper industry due to the increasing demand for high-quality coated paper. A kaolin pigment presenting lower viscosity at high shear rates and high solid percentages and that provides the coated paper with good optical properties, such as high sheet and print gloss, without loss of opacity, would be of great interest to the paper industry. There are fine kaolin pigments available in the market that provide high sheet gloss and low viscosity at high shear rates and high solids levels, but with decreased print gloss and/or opacity. It is also known that the presence of fines improves both viscosity at high shear rates and sheet gloss, but adversely affects opacity and print gloss. It is further known that particles in the shape of platelets and with narrow particle size distribution contribute to sheet opacity, but adversely affect the rheology of the pigment. However, by rigorously controlling particle size and shape, as well as particle size and shape distribution, it is possible to obtain kaolin pigments with simultaneously improved rheological and optical properties.

Within this concept, US Patent 6 402 826 describes a kaolin pigment consisting of coarse kaolin or a blend of coarse and fine kaolin, which provides improved brightness, opacity, paper gloss and print gloss properties. The method for obtaining this pigment consists of removing the ultra-fine fraction of coarse kaolin, leaving only the coarse fraction in the pigment, which typically has more spherical particles in the course end and platelets in the fine end, resulting in an overall shape factor greater than 12. If the fine-free coarse kaolin alone does not provide good fluidity, fine kaolin is added in an amount of 0.1% to 30.0% by weight of the blend. Coarse kaolin has a Hinckley index greater than 0.6 and fine kaolin has a Hinckley index less than 0.5. In the resulting pigment, at least 91 % by weight of the particles are smaller than 2 µm and no more than 30% by weight of the particles are less than 0,25 µm, and Hercules viscosity is greater than 250 rpm at 18 dynes at a solids concentration ranging from 65 to 75%.

Kaolin particle size is usually determined by sedimentation in an aqueous medium. The conventional term "equivalent spherical diameter" is used to designate particle size, although kaolin particles are not spherical. Particle size greater than 2 µm is much used in the paper industry as a control parameter, although, from a process point of view, this is not a determiner of the characteristics of the pigment. The equipment conventionally used to determine particle size distribution is the Sedigraph.

Direct shape factor measurement is usually performed using a scanning electron microscope and involves measuring the largest dimension and smallest dimension of each particle. In the case of kaolin, the smallest dimension is thickness. The ratio between the largest and smallest diameter is the shape factor. These measurements must be performed on a large number of particles to ensure that they are representative.

The Hercules Viscometer is a piece of equipment that is widely used to determine viscosity at high shear rates. Viscosity measurements for high-viscosity pigments are reported as rpm @18 dynes. As viscosity decreases, the rpm increases, however, in general, viscosities reported in rpm mean high viscosity values. Low viscosity pigments are reported by the Hercules Viscometer in dynes, usually at 1100 rpm. As viscosity decreases, dyne values also decrease. Therefore, it is known that a pigment has good rheological properties when its Hercules viscosity values are reported in dynes at high solids concentrations.

Thus, to enable kaolin to be applied at high solids concentrations and to simultaneously improve the optical and rheological properties, the applicant applied for patent number PI 0202268-0 describing a high performance kaolin clay, with a paper coating made of high performance kaolin pigment, and a method for producing high performance kaolin pigment. This kaolin pigment provides both improved rheological properties and improved optical properties, obtained through rigorous control of particle shape and size and of particle shape and size distribution. Said kaolin pigment has ISO brightness greater than 88.5; particle size distribution such that at least 94% by weight of the particles are smaller than 2 µm and no more than 25% by weight of the particles are smaller than 0,2 µm; and a Hercules Viscosity of less than 18 dynes at 1100 rpm in pulps with solid concentrations ranging from 70 to 75%. The method for obtaining this high performance pigment involves several stages of coarse kaolin processing, including dispersion, desanding, centrifuging for removal of the coarse fraction and removal of impurities, using conventional methods, such as magnetic separation, flotation and chemical leaching. Said method further involves various stages of fine kaolin processing, including dispersion, desanding, centrifuging for removal of the coarse fraction and removal of impurities, using conventional methods, such as magnetic separation, flotation and chemical leaching. When processing the coarse kaolin, in the centrifuging stage, a fine fraction is obtained having a narrow particle size distribution such that at least 94% by weight of the particles are less than 2 µm and no more than 18 % by weight are smaller than 0,2 µm. When processing the fine kaolin, in the centrifuge stage, a fine fraction is obtained having a particle size distribution such that at least 90% by weight of the particles are less than 0.5 µm and at least 50% by weight are smaller than 0.2 µm.

From the description contained in the patent application summarized above, it is derived that the high performance kaolin pigment presented is produced through a blend of kaolins, where the fine fraction of a coarse kaolin is blended with the fine fraction of a fine kaolin, forming a pigment used as a coating for paper. It should be noted that the patent makes no mention to the coarse fraction of the coarse kaolin and one presumes that it is discarded.

With the purpose of developing a method to make use of this coarse fraction of coarse kaolin (the waste generated in the production of the high performance kaolin pigment described above), the applicant advanced in his studies and developed an improvement in the coarse kaolin production process, resulting in a high brightness and low viscosity product, suitable for use as a paper filler and/or rotogravure pigment.

This invention will be better understood through the detailed description below, referenced to a single block diagram of the subject matter of this application.

According to this illustration, the raw material used in the improved production process resulting in high brightness and low viscosity coarse coating kaolin is the coarse portion of the coarse kaolin produced as waste in the method for producing high performance kaolin, as per PI 0202268-0. This raw material undergoes the following processing stages: A) delamination of the coarse waste; followed by B) centrifuging of the delaminated kaolin clay; followed by C) magnetic separation and then by the stages of D) chemical bleaching, E) filtering and F) drying, thus producing a high brightness and low viscosity paper coating.

It should be noted that the kaolin clays of this invention have a brightness/particle size ratio like no other kaolin known in the state of the art, as they have coarse particle size (between 45 and 65 % < 2 µm) and brightness (ISO) greater than about 87.5, more precisely between 87.5 to 88.5.

The aspect ratio of these kaolins ranges from about 25 to about 40, which makes this invention more surprising still, as kaolins having this aspect ratio level have never had brightness (ISO) greater than 85.0. This invention includes these kaolins, the compounds that contain them and any other application in which they are used.

The improved production process resulting in high brightness and low viscosity coarse kaolin for use as a paper coating includes the stages below: The gross kaolin described in PI 0202268-0 is subject to the following processing stages:
a) Delamination of the kaolin clay, where it is made thinner by 10 to 20 percent points, as measured in the fraction equal to or less than 2 µm;
b) Centrifuging of the delaminated clay, thereby producing a kaolin clay with a particle size distribution ranging from 45 to 65% < 2 µm, depending on the type of application and where it will be used in;
c) Magnetic separation to remove any ferriferous and magnetic contaminants;
d) Chemical bleaching to remove any remaining ferriferous contaminants;
e) Filtering and
f) Drying.

In more detail, the improved process begins with the delamination of the coarse waste. In this stage the type of product to be produced is defined: if the delamination delta (increase of the percentage of particles equal to or less than 2 µm) is 5 to 10, then the product will be a paper filler pigment. If a 15 to 20 delta is applied, then the product will be a pigment for rotogravure.

Although not part of the scope of this invention, the delaminator is a type of mill, with a low-rotation and high-torque agitation system where special fine sand is used as a grinding medium. In the delamination process, the kaolin clay crosses a sand bed under agitation in the upward direction. The control parameters are the apparent sand-filled volume, agitator rotation and the flow rate of the kaolin clay. By setting these parameters the delamination delta is determined.

After the coarse kaolin delamination stage, the resulting delaminated kaolin goes through the centrifuging stage, using horizontal decanter centrifuges with about 2000 G acceleration. The pigment granulometric section is defined In this stage. The granulometric section applied to the pigment for paper charge is 45 to 50% equal or lower than 2 µm, whereas for rotogravure pigment section applied is 60 to 65% equal or lower than 2 µm.

Magnetic separation is the next stage, where cryogenic magnetic separators, with a high magnetic field of approximately 5.0 T, are used to remove magnetically susceptible contaminants, especially iron oxides. The magnetic fraction is discarded and the remaining fraction follows to the chemical bleaching stage.

In the chemical bleaching stage, which is similar to leaching, chemical reagents reduce Fe⁺³ to Fe⁺², which will then be solubilized and removed in the filtering stage.

In the filtering stage, the solubilized iron is removed and the solids concentration of the slurry is increased, as it has suffered dilution in the previous process stages. Filtering may be performed by press or vacuum (rotary) filters.

Finally, in the drying stage, the product's moisture is adjusted, removing the moisture that was not removed in the filtering stage, until achieving a specified moisture level. The equipment conventionally used includes spray dryers, which produce dry powdered kaolin clay, or apron dryers, which produce small kaolin lumps or pellets.

### Application Examples

In the application examples below, the pigment obtained through the improved process, hereinafter revered to as the (New Concept), was tested in a pilot pant, using typical LWC (light weight coated) formulations, rotogravure, in the following order:
a) Tests comparing the (New Concept) to an American delaminated clay in formulations containing talc,
b) Tests comparing the (New Concept) to a typical clay from Central Europe (CE clay) in formulations containing talk,
c) Tests comparing the (New Concept) to a typical clay from Cornwall - England, in formulations containing platy, a Brazilian kaolin clay, and Calcium Carbonate.
d) Tests comparing the (New Concept) to another commercial product from Rio Capim that is widely used to coat LWC - rotogravure paper and also to an English engineered kaolin clay that is also used in this same application. The tests were performed with high-talc ULWC formulations.

In order to expand the range of application of the (New Concept) presented in this application, we shall also present a CLC test performed on WF (wood free) paper, with the purpose of obtaining CWF (coated wood free) matt-finish paper. In the example the (New Concept) is compared to Brazilian commercial platy kaolin clay and an English kaolin clay, used as a benchmark.

### Example 1

In this example two pigments in a typical commercial formulation arte compared as follows: An American delaminated product, having the following Particle Size Distribution (PSD)

| | |
|---|---|
| < 2 µm | 86% |
| < 1 µm | 73.1 % |
| < 0.5 µm | 55.9 % |
| < 0.2 µm | 26.2 % |

is compared to the new pigment known as the (New Concept) which, after dispersion to 67.4% solids was found to have the following PSD:

| | |
|---|---|
| < 2 µm | 64.8 % |
| < 1 µm | 39.5 % |
| < 0.5 µm | 18.9 % |
| < 0.2 µm | 5.0 % |

The formulation used, a typical rotogravure formulation, contained 5.2% rotogravure latex, 0,5% calcium stearate and a small amount of additives.

The coating process was performed in the pilot plant with the following machine conditions:

| | |
|---|---|
| "Coating Method" | Optiblade |
| speed | 1700 m/min |
| angle | 52° |
| lamina | 0,381 mm, 84 mm, 45° |

The coated paper was calendered under the same conditions and the results are found in table 1. The advantages of using the New Concept pigment instead of the delaminated kaolin clay are clearly seen. The improved optical properties, especially the results of the "missing dots" test (which describes the distance in mm required to find the twentieth missing dot on a sheet of paper printed under the conditions described [*]) demonstrate the superiority of the new concept as a rotogravure pigment.

**Table 1 - Comparison to American delaminated kaolin clay**

| Formulation | 1 | 2 |
|---|---|---|
| Delaminated | 40 | |
| New Concept | | 40 |
| Talc | 60 | 60 |
| | | |
| Ink Solids, % | 55.9 | 55 |
| Speed, m/min | 1700 | 1700 |
| Grammage (interpolated, g/m2) | 6.5 | 6.5 |
| Paper Results, up side | | |
| ISO Brightness | 73.2 | 73.8 |
| L* Value | 90.4 | 90.5 |
| a* Value | -1.6 | -1.6 |
| b* Value | 4.35 | 4.2 |
| Opacity, % | 91.2 | 91.2 |
| Smoothness (PPS) | 1.15 | 0.9 |
| Gloss ,% (Lehman) | 46 | 52 |
| Missing dots, mm | 58 | 82 |

| | | |
|---|---|---|
| (*) The results of the "missing dots" test depend a lot on the printing methods used in the test and must be compared relatively in the same test series. | | |

### Example 2

The (New Concept) was compared to a pigment produced in Central Europe and typically used in LWC - Rotogravure formulations.

The formulations containing pigments as described in table 2 contained 4.5% rotogravure latex and 1% de Calcium Stearate.

A Jet-type applier was used and the tests were performed at 1600 m/mim. The coated paper samples were calendered under identical conditions and the results are found in table 2

Due to runnability problems at the speed used, some coating pigments had to be diluted and the final solids % results shown in table 2 indicate the conditions in which the coating process could be conducted without runnability problems.

In formulation 1 the CE clay, having an aspect ratio of about >55, and the following particle size distribution:

| | |
|---|---|
| < 2 µm | 60,5 % |
| < 1 µm | 41, % |
| < 0.5 µm | 23,5 % |
| < 0.2 µm | 9,5µm % |

was used in pure form with 30% talc and compared to the New Concept (formulation 2), also in pure form and with 30 % talc.

In formulations 3 and 4 the CE clay was replaced by the (New Concept) at given proportions, as presented in Table 2.

Formulation 1 was gradually diluted until achieving 58,1% solids, at which point the tests could be performed without runnability problems. Less dilution was required for formulation 2 and at 60.8 % solids no runnability problems were encountered. Formulation 3 was not diluted, while slight dilution was applied to formulation 4.

In terms of runnability the (New Concept) pigment is superior to CE clay and by replacing one for the other, the solids % can be increased by at least 2.5 %. By partially replacing CE clay with the (New Concept) the Solids % can also be increased, thereby obtaining significant advantages in terms of coated paper characteristics

The results of the coated sheets tests are found in table 2. These results demonstrate improvement in all optical properties when CE clay is entirely or partially replaced. Missing dots tests results also demonstrate the superiority of the New Concept.

**Table 2 - Comparison/Synergy with Central European Kaolin**

| Formulation | 1 | 2 | 3 | 4 |
|---|---|---|---|---|
| CE clay | 70 | | 55 | 35 |
| New Concept | | 70 | 15 | 35 |
| Talc | 30 | 30 | 30 | 30 |
| | | | | |
| Solids, %, initial | 61.2 | 62 | 60.2 | 60.3 |
| Solids, %, final | 58.1 | 60.8 | 60.8 | 59.5 |
| speed, m/min | 1600 | 1600 | 1600 | 1600 |
| Grammage(interpolated, g/m2) | 8 | 8 | 8 | 8 |
| Paper Results, up side | | | | |
| ISO Brightness | 73.2 | 73.9 | 73.8 | 73.6 |
| L* Value | 90.8 | 91.0 | 90.9 | 90.8 |
| a* Value | -1.1 | -1.03 | -1.02 | -0.97 |
| b* Value | 4.9 | 4.6 | 4.5 | 4.6 |
| Yellowness | 8.6 | 8.1 | 8.2 | 8.1 |
| Opacity, % | 89 | 89.3 | 90.2 | 89.4 |
| Smoothness (PPS) | 1.65 | 1.25 | 1.23 | 1.33 |
| Gloss,% (Lehman) | 42.5 | 55.5 | 53.5 | 53.5 |
| Missing dots, mm | 102 | 108 | 109 | 110 |

### Example 3

In this example three pigments are compared: a Brazilian commercial kaolin clay, having the following particle size distribution :

| | |
|---|---|
| < 2 µm | 82% |
| < 1 µm | 67% |
| < 0.5 µm | 42 % |
| < 0.2 µm | 12 % |

an English kaolin clay, having an average aspect ratio of > 50 and a PSD such that:

| | |
|---|---|
| < 2 µm | 60,5 % |
| < 1 µm | 44.5 % |
| < 0.5 µm | 28.5 % |
| < 0.2 µm | 11.5 % |

and the (New Concept) kaolin presented in the previous examples.

The formulation used was a typical rotogravure formulation, containing 5.0 % rotogravure latex and 0,6 % Calcium Stearate.

The coating process was conducted in a pilot plant using a jet coater at 1300 m/min.

The properties of the coated sheets after calendaring under identical conditions are presented in table 3 .

Formulation 1 is a commercial formulation where kaolin clay, talc and calcium carbonate are used as pigments. Calcium carbonate improves pigment runnability and the overall optical properties of coated paper. This is also why two kaolin clays were used in the formulation. With the level of talc used, 35% Brazilian clay would not provide the coated paper with the desired print properties, while 35% English kaolin clay would not provide the desired runnability and optical properties.

In formulation 2, 15% of the English kaolin clay is replaced by the (New Concept) pigment and in formulation 3 the Brazilian kaolin and the English kaolin are replaced in their entirety, that is all 35 %.

The results are presented for both sides of the paper (top side and bottom side), due to the 2- sidedness characteristics in this case.

The results in table 3 demonstrate the advantage of using the (New Concept) as it improves the overall optical properties of the coated paper and especially the printing characteristics, defined in "missing dots".

**Table 3 - Comparison with a Brazilian clay (commercial "platy") and English Rotogravure kaolin.**

| Formulation | 1 | | 2 | | 3 | |
|---|---|---|---|---|---|---|
| Brazilian Platy kaolin, commercial | 20 | | 20 | | | |
| English Rotogravure Kaolin | 15 | | | | | |
| New Concept | | | 15 | | 35 | |
| Calcium Carbonate | 25 | | 25 | | 25 | |
| Talco | 40 | | 40 | | 40 | |
| | | | | | | |
| Solids, % | 59 | | 59.2 | | 59 | |
| Speed, m/min | 1300 | | 1300 | | 1300 | |
| Grammage g/m2 | 10 | | 10 | | 10 | |
| Paper Results | ts | bs | ts | bs | ts | bs |
| ISO Brightness | 79.6 | 79.7 | 80.2 | 80.4 | 80.2 | 80.4 |
| L* Value | 92.8 | 92.8 | 93.0 | 93.1 | 93.0 | 93.1 |
| a* Value | -1.11 | -1.08 | -1.07 | -1.04 | -1.05 | -1.05 |
| b* Value | 2.50 | 2.44 | 2.42 | 2.37 | 2.45 | 2.36 |
| Opacity, % | 90.0 | | 90.1 | | 90.2 | |
| Smoothness (PPS) | 0.78 | 0.83 | 0.76 | 0.80 | 0.76 | 0.76 |
| Gloss,% (Lehman) | 50.3 | 49.1 | 54.0 | 53.5 | 50.3 | 49.4 |
| Missing dots, mm | 63.5 | 69.5 | 64 | 78 | 82 | 77.5 |

### Example 4

In the test program described below the commercial Brazilian clay described in example 3 and engineered English kaolin clay are compared to the New Concept. The English kaolin had the following particle size distribution:

| | |
|---|---|
| < 2 µm | 89 % |
| < 1 µm | 69 % |
| < 0.5 µm | 39% |
| < 0.2 µm | 13 % |

The ULWC formulations contained calcined kaolin clay and high talc content, as seen in table 4. The amount of rotogravure latex used was 5.5 % and the method used was "optiblade" at1650 m/min. The coated paper sheets were calendered under similar conditions

Note that the results in table 4 are very similar. Optical properties are similar, although a slight decrease in opacity occurs when using the (New Concept), perhaps explained by the increase in brightness.

The print results in terms of missing dots once again demonstrate the excellent performance of the (New Concept).

**Table 4 - Comparison with a Brazilian delaminated "platy" kaolin clay and engineered English kaolin clay**

| Formulation | 1 | 2 | 3 |
|---|---|---|---|
| Brazilian Platy kaolin, commercial | 28 | | |
| English engineered clay | | 28 | |
| New Concept | | | 28 |
| Calcined kaolin | 7 | 7 | 7 |
| Talc | 65 | 65 | 65 |
| | | | |
| Solids, % | 50.5 | 50.2 | 50.9 |
| Speed , m/min | 1650 | 1650 | 1650 |
| Grammage g/m2 | 7 | 7 | 7 |
| Paper results, up side | | | |
| ISO | 73.2 | 73.2 | 73.7 |
| Opacity, % | 89.2 | 89 | 88.8 |
| Smoothness (PPS) | 0.7 | 0.7 | 0.7 |
| Gloss ,% (Lehman) | 54 | 57 | 55.7 |
| Missing dots, mm | 83 | 83 | 85 |

### Example 5

Due to the versatility of the kaolin clay of this invention, it is also very suitable for CWF matt applications. The CLC test program (one side coated) presented in table 5 shows the results of a comparison between the (New Concept) and the kaolin clays described in example 4, i.e, Brazilian "platy" clay and English engineered kaolin clay.

The optical properties found are similar, but the print test results demonstrate the superiority of the (New Concept) pigment. Even with lower grammage, the coating achieved better results, such as higher Delta Gloss (Gloss Variation).

**Table 5 - Comparison with Brazilian "platy" kaolin clay and English engineered kaolin clay. CWF matt application - CLC trial**

| Formulation | 1 | 2 | 3 |
|---|---|---|---|
| Brazilian Platy kaolin, commercial | 20 | | |
| English engineered clay | | 20 | |
| New Concept | | | 20 |
| Calcium Carbonate | 80 | 80 | 80 |
| | | | |
| | | | |
| Solids, % | 66 | 66 | 66 |
| Speed, m/min | 600 | 600 | 600 |
| Grammage g/m2 | 15 | 15 | 15 |
| Paper Results | | | |
| ISO Brightness | 90.3 | 90 | 90.5 |
| Opacity, % | 88.6 | 88.6 | 88.4 |
| Smoothness (PPS) | 4.2 | 3.95 | 4.07 |
| Gloss ,% (Lehman) | 17 | 15.5 | 13.8 |
| Print Gloss at stated grammage | 15.6 g/m2 | 16.6 g/m2 | 14.2 g/m2 |
| 1.5 g/m2 pigment | 43 | 39 | 41 |
| Non-printed area | 17 | 16 | 13 |
| Gloss Variation | 27 | 22 | 28 |

Although the process proposal described and illustrated is preferred, it should be noted that parameter changes could be made without departing from the scope of this invention.

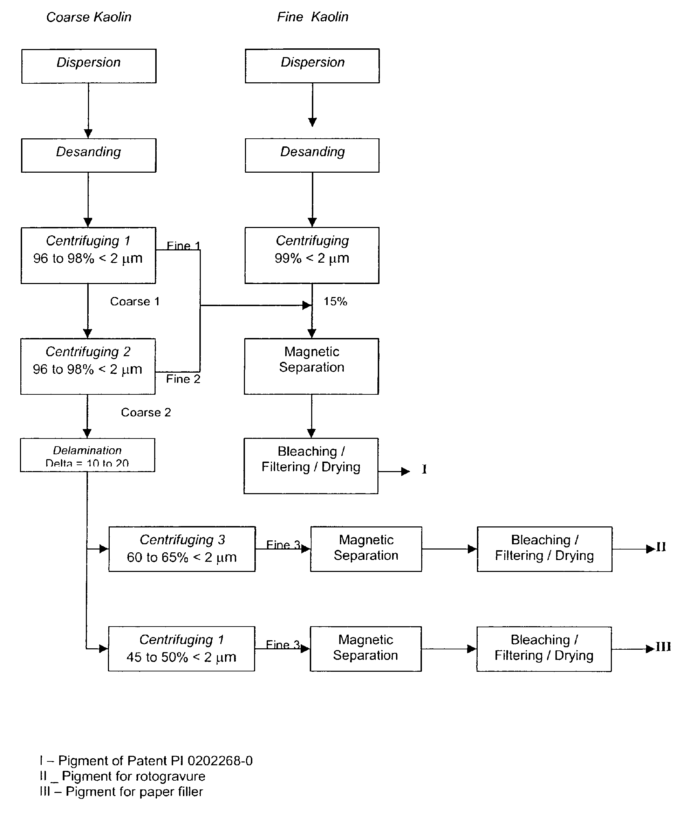

## Claims

1. "Production process improvement resulting in a high brightness and low viscosity coarse kaolin clay for use as a coating", **characterized by** the fact that a raw material consisting of the coarse fraction of the coarse kaolin clay discarded in the high performance pigment production method is subject to A) delamination of the coarse waste; followed by B) centrifuging of the delaminated kaolin clay; followed by C) magnetic separation and then by the stages of D) chemical bleaching E) filtering and F) drying, thereby producing a high brightness and low viscosity paper coating pigment.

2. A "Production process improvement resulting in a high brightness and low viscosity coarse kaolin clay for use as a coating" according to claim 1, **characterized by** the fact the fact that the clay undergoes the following stages:
A) Delamination of the kaolin clay, where the clay is made thinner by 10 to 20 percent points, as measured in the fraction equal to or less than 2 micrometers;
B) Centrifuging of the delaminated kaolin clay, producing a kaolin with a particle size distribution ranging from 45 to 65% < 2 micrometers, depending on the type of application it is to be used for;
C) Magnetic separation to remove any ferriferous and magnetic contaminants;
D) Chemical bleaching to remove any remaining ferriferous contaminants;
E) Filtering and
F) Drying.

3. A "Production process improvement resulting in a high brightness and low viscosity coarse kaolin clay for use as a coating" according to claim one, **characterized by** the fact that a delamination delta ranging from 5 to 10 is applied to produce a paper filler pigment;

4. A "Production process improvement resulting in a high brightness and low viscosity coarse kaolin clay for use as a coating" according to claim 1, **characterized by** the fact a delamination delta ranging from 15 to 20 is applied to produce a rotogravure pigment;

5. A "Production process improvement resulting in a high brightness and low viscosity coarse kaolin clay for use as a coating" according to claim 1 or 3, **characterized by** the fact that in the centrifuge process presenting the pigment granulometric section for paper charge adjusted for 60 to 65% equal or lower than 2 micrometers.

6. A "Production process improvement resulting in a high brightness and low viscosity coarse kaolin clay for use as a coating" according to claim 1 or 4, **characterized by** the fact that in the centrifuge process presenting the pigment granulometric section for rotogravure adjusted for 60 to 65% equal or lower than 2 micrometersmeters, to produce a rotogravure pigment.
